# EUROPEAN PATENT APPLICATION

(11) **EP 3 166 047 A1**
(43) Date of publication of application: **10.05.2017**
(21) Application number: 15815905.3
(22) Date of filing: 29.06.2015
(51) Int. Cl.: G06K 13/08, G07F 19/00

(54) **METHOD AND SYSTEM FOR HANDLING SITUATION OF CARD DETAINMENT IN SELF-SERVICE TERMINAL**

(30) Priority: 02.07.2014 CN 201410314920
(71) Applicant: GRG Banking Equipment Co., Ltd., Guangzhou, Guangdong 510663 (CN)
(72) Inventor: ZHANG, Hongshuai, Guangzhou Guangdong 510663 (CN); WANG, Qinghua, Guangzhou Guangdong 510663 (CN); DONG, Xuewen, Guangzhou Guangdong 510663 (CN); YAO, Xinrui, Guangzhou Guangdong 510663 (CN); WANG, Xin, Guangzhou Guangdong 510663 (CN); YU, Pang, Guangzhou Guangdong 510663 (CN)
(74) Representative: Lorenz & Kopf PartG mbB Patentanwälte, LKGLOBAL
(86) International application number: PCT/CN2015/082603
(87) International publication number: WO 2016/000580

(57) **Abstract**

Disclosed are a system and a method for handling the situation of card detainment in a self-service terminal. The system for handling the situation of card detainment in a self-service terminal comprises a card detainment handling server, a first self-service terminal and a second self-service terminal, which are communicatively interconnected. The card detainment handling server comprises a card detainment information storage module for storing information related to a detained card. The card detainment handling server is also communicatively connected with a bank background database, i.e. a banking system, in order to obtain the account information of the detained card and the identity information of the user owning the detained card from the bank background database and help a card detainment information and identity authentication module authenticate the validity of the card detainment information and the legality of user identity. The system and method for handling card detainment in a self-service terminal realize the purpose that a user can take his card back at a different place after the card is detained, thus saving money, time and energy costs for the user, bringing great convenience to the user and reflecting the service aim of providing convenience to users in banks.

## Description

The present application claims the priority to Chinese Patent Application No.201410314920.0, titled "METHOD AND SYSTEM FOR HANDLING SITUATION OF CARD DETAINMENT IN SELF-SERVICE TERMINAL", filed on July 2, 2014 with the State Intellectual Property Office of the People's Republic of China, which is incorporated herein by reference in its entirety.

### TECHNICAL FIELD

The present disclosure relates to the field of financial self-service terminal, and in particular to a method and a system for handling card detainment in a self-service terminal.

### BACKGROUND

In existing ATM (Automatic Teller Machine) technologies, an ATM may detain a card due to operation mistakes of a user, such as, inputting incorrect passwords for three times in a row, or forgetting to take the card out before time-out. After the card is detained, if the user wants to get the detained card, a current practice is that the user has to go to a counter of the bank detaining the card and registers with an identity card, in order to take back the card.

If the card detainment is inter-bank, it is very troublesome to get the detained card because regulations of some banks are very strict. For example, if a user has a card of a bank A and the card is detained on an ATM machine of a bank B, the user has to go to a counter of the bank A to get a relevant certificate of the detained card which needs to be stamped, and then take the certificate of the bank A to a counter of the bank B to register via the identity card, in order to take back the card.In a self-service device and a method for retaining or taking a card disclosed in an invention patent having an application number 201310200388.5, after a card of a user is detained, the user can take the detained card out from a machine which retains the card via a card number and a password by self-service. Although the device for detaining or returning a card provides more convenience to a user than a traditional one, the device has its limitations. That is, if a card of a user is detained by an ATM having a serial number B and belonging to a bank A, only from the ATM having the serial number B and belonging to the bank A can the user take back the detained card by self-service, which means the detained card cannot be handled on another ATM machine elsewhere. That is to say, a requirement of taking back the card at a different place cannot be handled with the device for detaining or returning a card.Therefore, it is very necessary to provide a method and a system for handling a detained card of a user on an ATM machine at a different place, to bring convenience for the user to handle a detained card at a different place to saves cost of time, money and energy

### SUMMARY

In order to solve the technical problem in the conventional technology that a self-service terminal cannot handle a card detained by a self-service terminal at a different place, a system for handling card detainment in a self-service terminal is provided according to the present disclosure, with which a user can take a new card from a self-service terminal at a different place.

A method for handling card detainment in a self-service terminal is further provided according to the present disclosure.

The system for handling card detainment in a self-service terminal according to the present disclosure includes:
a card detainment handling server, a first self-service terminal and a second self-service terminal which are interconnected communicatively, where
the card detainment handling server includes a card detainment information storage module configured to store relevant information of a detained card;
the first self-service terminal includes a detained card storage module, a detained card destroying module and a detained card control module, the detained card storage module is configured to store the detained physical card, the detained card destroying module is configured to destroy information of the detained card when necessary, and the detained card control module is configured to perform control to store a card which is not taken out before time-out into the detained card storage module, send the relevant information of the detained card to the card detainment handling server, and convey the detained card in the detained card storage module to the detained card destroying module when appropriate; and
the second self-service terminal includes a card detainment information and identity information input module, a card detainment information and identity authentication module, a card issuing module and a central control module, the card detainment information and identity information input module is configured to input card detainment information and user identity information, the card detainment information and identity authentication module is configured to authenticate whether the card detainment information is valid and whether the user identity information is correct, the card issuing module is configured to write information of the detained card into a new card after confirming that the detained card is destroyed, and issue the new card to a user after authenticating identity of the user, and the central control module is configured to control each module in the second self-service terminal to execute a task.

Preferably, the card detainment handling server is communicatively connected to a bank backend database. The card detainment handling server is configured to obtain account information and user identity information of the detained card from the bank backend database, to assist the card detainment information and identity authentication module to authenticate the validity of the card detainment information and the correctness of the user identity, and to assist the card issuing module to write the account information and the user identity information of the detained card into the new card.

Preferably, the first self-service terminal further includes a clearing module configured to clear information in the detained card and clear all dirt on the surface of the card to make the card to be a recyclable blank card.

Preferably, the card detainment handling server is configured to store card detainment information of all the first self-service terminals under administration of the card detainment handling server, and the card detainment information includes time of detaining a card, a serial number of a self-service terminal detaining the card, a card number of the detained card, magnetic track information of the card and identity information of a possessor of the detained card.

Preferably, the first self-service terminal further includes a short message sending module configured to send a short message to inform the user that the card is detained and that the card can be taken back on a self-service terminal at a different place.

Preferably, the first self-service terminal further includes a card detainment information and identity information input module, a card detainment and identity authentication module and a card issuing module, where the card detainment information and identity information input module is configured to input card detainment information and user identity information, the card detainment and identity authentication module is configured to authenticate whether the card detainment information is valid and whether the user identity information is correct, and the card issuing module is configured to write information of the detained card into a new card after confirming that the detained card is destroyed, and issue the new card to a user after authenticating identity of the user; and/or the second self-service terminal further includes a detained card storage module, a detained card destroying module and a detained card control module integrated into the central control module, where the detained card storage module is configured to store the detained physical card, the detained card destroying module is configured to destroy information of the detained card when necessary, and the detained card control module is configured to perform control to store a card which is not taken out before time-out into the detained card storage module, send the relevant information of the detained card to the card detainment handling server, and convey the detained card in the detained card storage module to the detained card destroying module when appropriate.

Preferably, the first self-service terminal further includes an option operation module configured to provide an option of taking back the card at a different place for the user to select whether to take back the card at a different place, and in a case that the user selects the option of taking back the card at a different place, the detained card control module controls the detained card destroying module to destroy the detained card.

The method for handling card detainment in a self-service terminal according to the present disclosure includes:
step 1, reading, by a first self-service terminal detaining a card, card detainment information, and uploading, by the first self-service terminal, the card detainment information to a card detainment handling server, when a card is detained while a user performs a self-service business on the first self-service terminal;
step 2, selecting, by the user, a transaction of taking back the detained card on a second self-service terminal, and inputting, by the user, a tail number of the detained card and identity information;
step 3, sending, by the second self-service terminal, user input information to the card detainment handling server, determining, by the card detainment handling server, whether there is the card detainment information related to a card with the tail number, where if there is the card detainment information related to a card with the tail number, the method proceeds to step 4, and if there is not the card detainment information related to a card with the tail number, the method proceeds to step 8;
step 4, authenticating, by the card detainment handling server with a bank business system, whether the user identity information and inputted card information is correct, where if the user identity information and the inputted card information is correct, the method proceeds to step 5, and if any of the user identity information and the inputted card information is not correct, the method proceeds to step 8;
step 5, sending, by the second self-service terminal, a command of destroying the detained card to the first self-service terminal via the card detainment handling server, erasing, by the first self-service terminal, magnetic track information of the detained card to abandon the detained card, and sending, by the first self-service terminal, information that the detained card is successfully destroyed to the card detainment handling server, after the detained card is successfully abandoned;
step 6, sending, by the card detainment handling server to the second self-service terminal, card information of the user and a command of issuing a card, after confirming that the detained card is successfully destroyed;
step 7, writing, by the second self-service terminal, card information of the user into a new card, issuing, by the second self-service terminal, the new card to the user after the card information is written successfully, sending, by the second self-service terminal to the card detainment handling server, information of successfully issuing the card, and deleting, by the card detainment handling server, card detainment information related to the detained card from a card detainment information storage module; and
step 8, ending the process.

Preferably, after the card of the user is detained, step 1 includes: providing, by the first self-service terminal, an option for the user to select whether to take back the card at a different place; reading, by the first self-service terminal, the card detainment information, uploading, by the first self-service terminal, the card detainment information to the card detainment handling server, and erasing, by the first self-service terminal, magnetic track information of the detained card to destroy the detained card, in a case that the user selects to take back the card at a different place; and uploading, by the first self-service device, the card detainment information to the card detainment handling server, without temporarily erasing the magnetic track information of the detained card to destroy the detained card, in a case that the user does not select to take back the card at a different place.

Preferably, in step 6, the card information is sent to the second self-service terminal after encrypting the card information and verifying the integrity of the card information, and only authorized terminals can decrypt the card information and obtain the correct card information.

Because of configuration of the card detainment handling server, communication connections among the self-service terminal, the card detainment handling server and the bank business system, and configuration of functional modules such as the card detainment information storage module, the detained card storage module, the detained card control module, the card detainment information and user identity authentication module and the card issuing module, the system for handling card detainment in a self-service terminal according to the present disclosure achieves that a user can take back the card at a different place after the card is detained, which saves money, time and energy of the user, and provides much convenience to the user, thereby achieving the service aim of providing convenience to customers of banks. Further, the whole process of issuing a card to a user after the card is detained does not involve any bank staff, which saves a cost of human resources of a bank. In addition, technical solutions according to the present disclosure can be implemented by only adding the card issuing module to an existing self-service terminal in terms of hardware, leading to a low cost of system upgrade, and high practicability.

### BRIEF DESCRIPTION OF THE DRAWINGS

Figure 1 is a structural schematic diagram of a system module for handling card detainment in a self-service terminal according to a first embodiment of the present disclosure;
Figure 2 is a structural schematic diagram of a system module for handling card detainment in a self-service terminal according to a second embodiment of the present disclosure;
Figure 3 is a structural schematic diagram of a system module for handling card detainment in a self-service terminal according to a third embodiment of the present disclosure;
Figure 4 is a flow chart of a method for handling card detainment in a self-service terminal according to a preferred embodiment of the present disclosure;
Figure 5 is a first flow chart of card detainment involved in the method for handling card detainment in a self-service terminal according to the present disclosure;
Figure 6 is a second flow chart of card detainment involved in the method for handling card detainment in a self-service terminal according to the present disclosure;
Figure 7 is a third flow chart of card detainment involved in the method for handling card detainment in a self-service terminal according to the present disclosure; and
Figure 8 is a flow chart of taking back the card involved in the method for handling card detainment in a self-service terminal according to the present disclosure.

### DETAILED DESCRIPTION OF THE EMBODIMENTS

Hereinafter technical solutions of embodiments of the present disclosure are illustrated clearly and completely in conjunction with the drawings of the embodiments of the disclosure. Apparently, the described embodiments are merely a few rather than all of the embodiments of the present disclosure. All other embodiments obtained by persons of ordinary skill in the art based on the embodiments of the present disclosure without creative efforts shall fall within the protection scope of the present disclosure.

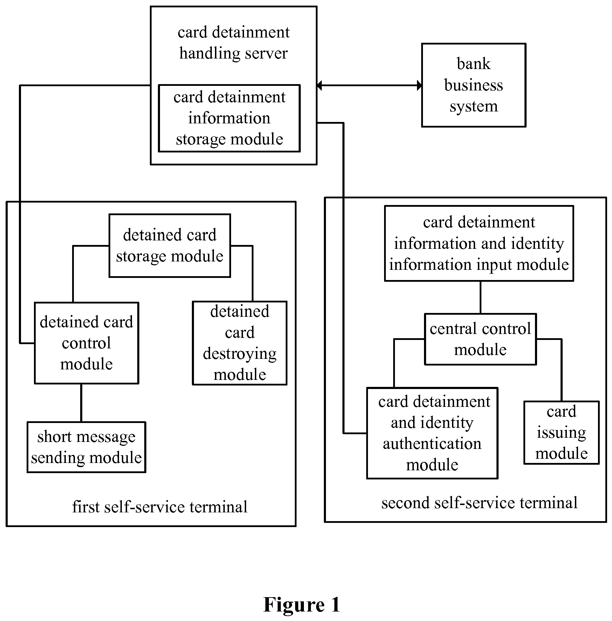

As shown in Figure 1, a system for handling card detainment in a self-service terminal is provided according to a first embodiment of the present disclosure, which includes a card detainment handling server, a first self-service terminal and a second self-service terminal, which are interconnected communicatively. The card detainment handling server includes a card detainment information storage module configured to store relevant information of a detained card. The card detainment handling server is also connected communicatively to a bank backend database, i.e., a bank business system, to obtain account information and user identity information of the detained card from the bank backend database, so as to assist a card detainment information and identity authentication module to authenticate the validity of the card detainment information and the correctness of the user identity, and assist a card issuing module to write the account information and the user identity information of the detained card into a new card. The first self-service terminal includes a detained card storage module, a detained card destroying module, a detained card control module and a short message sending module. The detained card storage module is configured to store the detained physical card. The detained card destroying module is configured to destroy information of the detained card when necessary, The detained card control module is configured to perform control to store a card which is not taken out before time-out into the detained card storage module, send the relevant information of the detained card to the card detainment handling server, and convey the detained card in the detained card storage module to the detained card destroying module when appropriate. The short message sending module is configured to send a short message to inform a user that the card is detained and that the card can be taken back on a self-service terminal at a different place. The second self-service terminal includes a card detainment information and identity information input module, a card detainment information and identity authentication module, a card issuing module and a central control module. The card detainment information and identity information input module is configured to input card detainment information and user identity information. The card detainment information and identity authentication module is configured to authenticate whether the card detainment information is valid and whether the user identity information is correct. The card issuing module is configured to write information of the detained card into a new card after confirming that the detained card is destroyed, and issue the new card to the user after authenticating identity of the user. The central control module is configured to control each module in the second self-service terminal to execute a task. A card reader having write and read functions is arranged in the card issuing module, such that the information of the detained card can be written into a new card. In addition, configuration of the short message sending module is a preferred solution, which may help the user to find out early that a card is detained and guide the user to get the card at a different place, thereby providing more convenience to the user.

In addition, it should be noted, the card detainment handling server is communicatively connected to multiple self-service terminals and administers all the connected self-service terminals. If a card detainment event happens to any one of the self-service terminals, the self-service terminal will upload card detainment information to the card detainment handling server. That is to say, the card detainment handling server stores card detainment information of all first self-service terminals under administration of the card detainment handling server. The card detainment information normally includes time of detaining a card, a serial number of a self-service terminal detaining the card, a card number of the detained card, magnetic track information of the card and identity information of a possessor of the detained card.

Preferably, the first self-service terminal further includes an option operation module configured to provide an option of taking back the card at a different place for a user to select whether to take back the card at a different place. In a case that the user selects the option of taking back the card at a different place, the detained card control module controls the detained card destroying module to destroy the detained card.

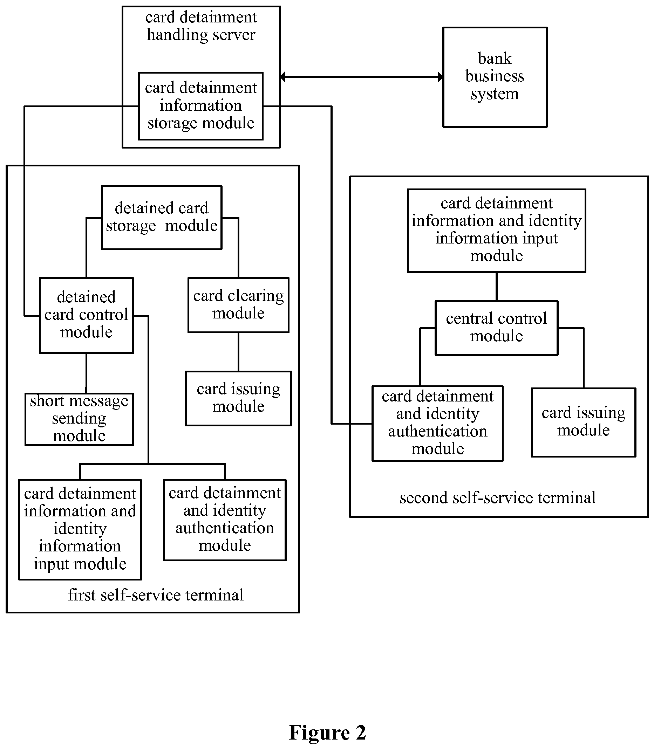

As shown in Figure 2, a system for handling card detainment in a self-service terminal is provided according a second embodiment of the present disclosure. Compared to the first embodiment, a main improvement of the system lies in modifying the first self-service terminal into a self-service terminal having a card issuing function. Therefore, the first self-service terminal is additionally provided with the card detainment information and identity information input module, the card detainment information and identity authentication module, the card detaining module, and programs of controlling those modules integrated in the detained card control module. In this way, the first self-service has the function of taking back the card by the user at a different place. That is, the first self-service terminal becomes the second self-service terminal located at a different place, with respect to another self-service terminal detaining a card. In addition, to facilitate the recycling of the detained card after being destroyed, a card clearing module is added in the first self-service terminal and configured to clear information in the detained card and clear all dirt on the surface of the card to make the card to be a recyclable blank card. The card clearing module may replace the detained card destroying module and is a preferred solution to the detained card destroying module.

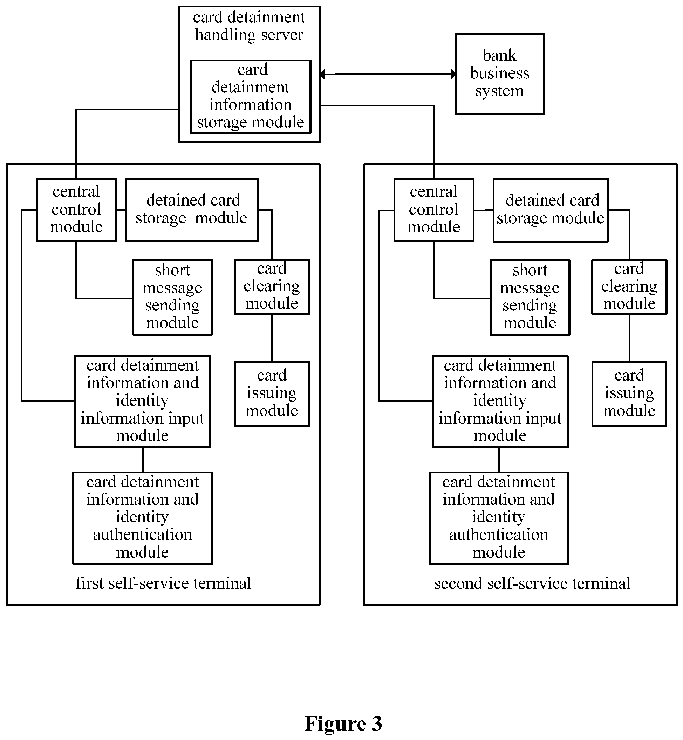

It should be noted, the second self-service terminal is named in relative to the first self-service terminal. Therefore, a self-service terminal may not absolutely a first self-service terminal or a second self-service terminal. Any self-service terminal may have functions of handling card detainment and issuing a card at a different place, and any self-service terminal may serve as a second self-service terminal at different place in relative to another self-service terminal detaining a card. Therefore, as a third embodiment according to the present disclosure shown in Figure 3, both a first self-service terminal and a second self-service terminal have a central control module, a detained card storage module, a card clearing module, a card issuing module, a card detainment information and identity information input module, a card detainment information and identity authentication module and a short message sending module. Under the control of the central control module, when a user does not take out a card before time-out, the self-service terminal detains the card, stores the card into the detained card storage module, uploads card detainment information to a card detainment handling server, and informs, via the short message sending module, the user that the card is detained and that the card can be taken back at a different place. For the second self-service terminal at a different place, in a case that the user selects the service of taking back the card at a different place, the user inputs card information (such as last four tail numbers of the detained card) and user identity information (such as a password) via the card detainment information and identity information input module, and when the card detainment and identity authentication module confirms that the card is detained and the user information is correct, the second self-service terminal sends a command of destroying the detained card to the first self-service terminal via the card detainment handling server. After the detained card is destroyed and abandoned, or the card is changed to be a blank card by clearing information of the card and dirt on the card (the latter is adopted in the present embodiment to handle the detained card for recycling). The first self-service terminal feeds back information that the card is destroyed, the card detainment handling server sends the card information to the second self-service terminal, after receiving the information that the detained card is destroyed. A card reader in the card issuing module of the second self-service terminal writes the card information of the detained card into a new card. And the new card is issued to the user after identity of the user is authenticated.

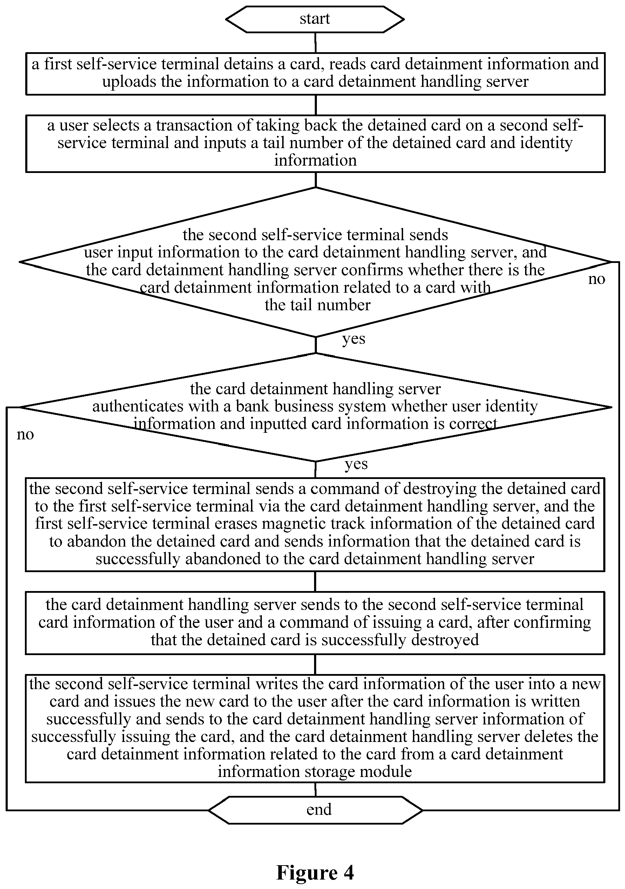

Hereinafter the method for handling card detainment in a self-service terminal according to the present disclosure is described with reference to Figure 4. The method for handling card detainment in a self-service terminal includes step 1 to step 7. In step 1, a first self-service terminal detaining a card reads card detainment information, and uploading the card detainment information to a card detainment handling server, when a card is detained while a user performs a self-service business on the first self-service terminal. In step 2, the user selects a transaction of taking back the detained card on a second self-service terminal, and inputs a tail number of the detained card and identity information. In step 3, the second self-service terminal sends user input information to the card detainment handling server, and the card detainment handling server determines whether there is the card detainment information related to a card with the tail number, where if there is the card detainment information related to a card with the tail number, the method proceeds to step 4, and if there is not the card detainment information related to a card with the tail number, the method proceeds to step 8. In step 4, the card detainment handling server authenticates with a bank business system, whether the user identity information and inputted card information is correct, where if the user identity information and the inputted card information is correct, the method proceeds to step 5, and if any of the user identity information and the inputted card information is not correct, the method proceeds to step 8. In step 5, the second self-service terminal sends a command of destroying the detained card to the first self-service terminal via the card detainment handling server, the first self-service terminal erases magnetic track information of the detained card to abandon the detained card, and the first self-service terminal sends information that the detained card is successfully destroyed to the card detainment handling server, after the detained card is successfully abandoned. In step 6, the card detainment handling server sends, to the second self-service terminal, card information of the user and a command of issuing a card, after confirming that the detained card is successfully destroyed. In step 7, the second self-service terminal writes card information of the user into a new card and issues the new card to the user after the card information is written successfully and sends to the card detainment handling server information of successfully issuing the card, and the card detainment handling server deletes card detainment information related to the detained card from a card detainment information storage module. In step 8, the process ends.

As a preferred solution of the method for handling card detainment in a self-service terminal, after the card of the user is detained in step 1, the first self-service terminal provides an option for the user to select whether to take back the card at a different place. The first self-service terminal reads the card detainment information, uploads the card detainment information to the card detainment handling server, and erases magnetic track information of the detained card to destroy the detained card, in a case that the user selects to take back the card at a different place. The first self-service device only uploads the card detainment information to the card detainment handling server, and temporarily does not erase the magnetic track information of the detained card to destroy the detained card, in a case that the user does not select to take back the card at a different place.

Preferably, in step 6, the card information is sent to the second self-service terminal after encrypting the card information and verifying the integrity of the card information, and only authorized terminals can decrypt the card information and obtain the correct card information.

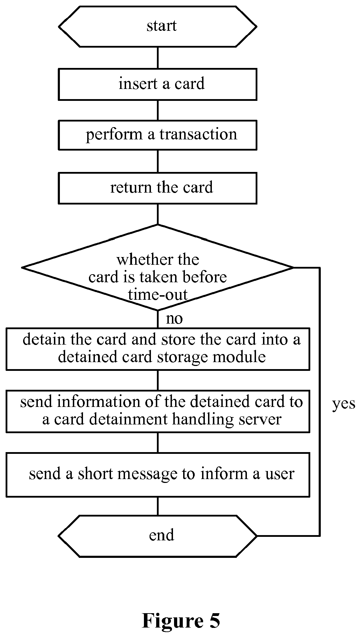

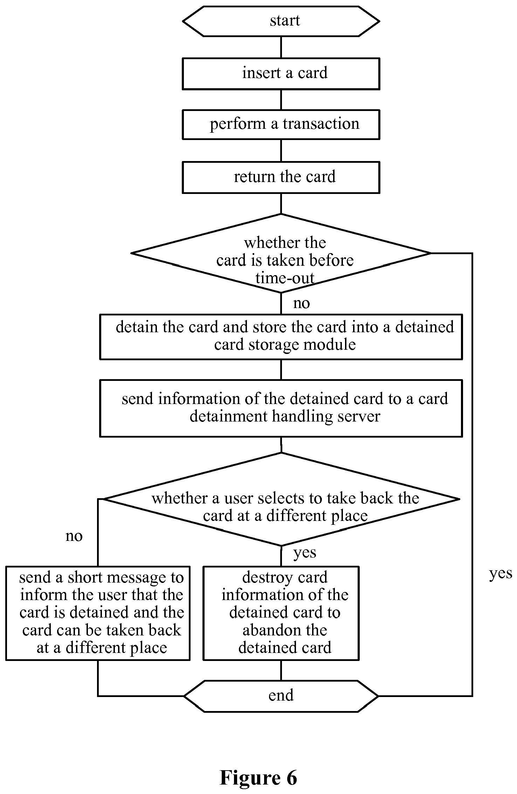

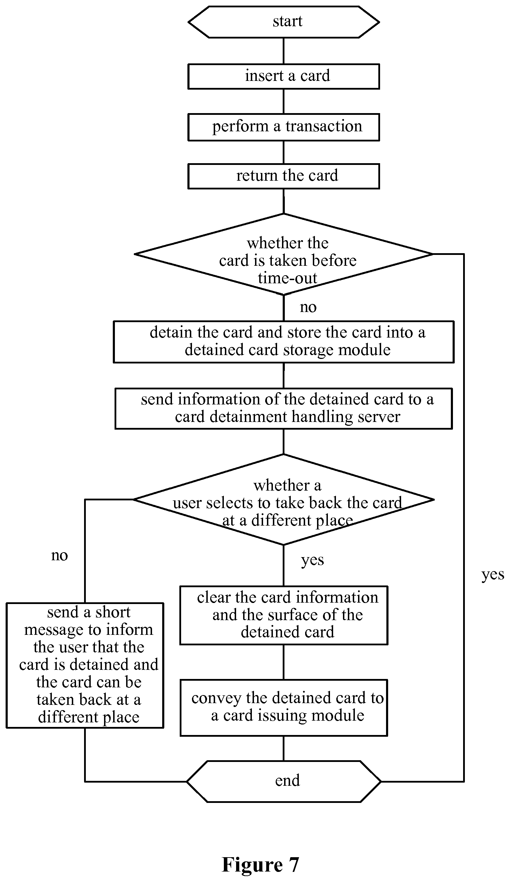

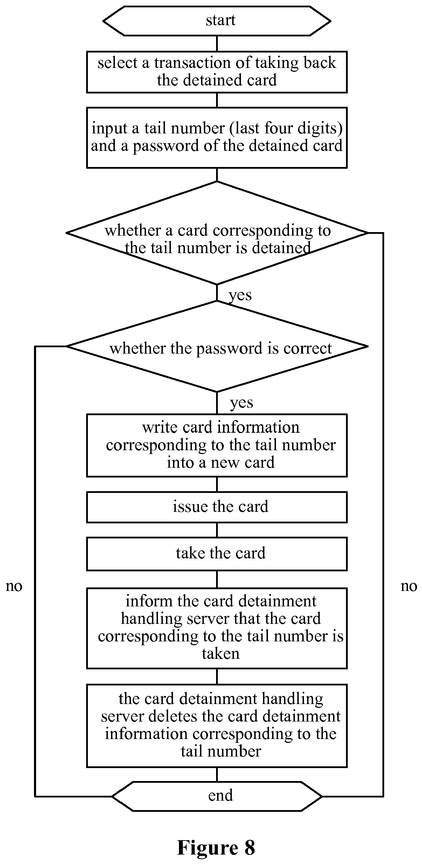

The method for handling card detainment in a self-service terminal according to the embodiment may be divided into a card detainment process and a card taking process. As shown in Figure 5, a basic card detainment process includes: detaining a card, sending information of the detained card to the card detainment handling server, and ending the process. Preferably, after a self-service terminal sends the information of the detained card to the card detainment handling server, a short message is sent to the user to inform the user that the card is detained and that the card can be taken back at a different place. In a case that the first self-service terminal is further provided with an option operation module, after the card is detained and the self-service terminal sends the information of the detained card to the card detainment handling server, an option is provided for the user to select whether to take back the card at a different place. A user usually knows in time that a card is detained when inputting incorrect password wrongly for several times due to forgetting it or carelessness, and selects whether to take back the card at a different place according to his own needs. If the user selects to take back the card at a different place, the self-service terminal promptly destroys the card information of the detained card and abandons the detained card, or clears the card information and the surface of the detained card, to make the detained card to be a blank card, and then the blank card is sent to a card issuing module for recycling. The two processes are respectively shown in Figure 6 and Figure 7. If the user does not select whether to take back the card at a different place, it is possible that the user does not notice that the card is detained. Therefore, the short message sending module informs the customer that the card is detained and the card can be taken back at a different place. As shown in Figure 8, a basic card taking process includes: selecting a transaction of taking back the detained card, inputting a tail number of the detained card, which is usually the last four digits, inputting a password of the detained card, confirming, by the self-service terminal whether a card corresponding to the tail number is detained, if the card detainment handling server does not store information that the card is detained, ending the process, if the card detainment handling server stores information that the card is detained, further conforming whether the password inputted by the user is correct, if the password is not correct, ending the process, if the password is correct, writing card information corresponding to the tail number into a new card, issuing the new card to the user, informing, by the self-service terminal, the card detainment handling server that the card corresponding to the tail number is taken, and deleting, by the card detainment handling server, the card detainment information corresponding to the tail number, to prevent taking multiple same cards.

Because of configuration of the card detainment handling server, communication connections among the self-service terminal, the card detainment handling server and the bank business system, and configuration of functional modules such as the card detainment information storage module, the detained card storage module, the detained card control module, the card detainment information and user identity authentication module and the card issuing module, the system for handling card detainment in a self-service terminal according to the present disclosure achieves that a user can take back the card at a different place after the card is detained, which saves money, time and energy of the user, and provides much convenience to the user, thereby achieving the service aim of providing convenience to customers of banks. Further, the whole process of issuing a card to a user after the card is detained does not involve any bank staff, which saves a cost of human resources of a bank. In addition, technical solutions according to the present disclosure can be implemented by only adding the card issuing module to an existing self-service terminal in terms of hardware, leading to a low cost of system upgrade and high practicability.

The above are only preferred embodiments of the present disclosure and not intended to limit protection scope of the disclosure. Equivalent variations made according to the present disclosure and contents shown in the drawings are also fall within the protection scope of the present disclosure.

## Claims

1. A system for handling card detainment in a self-service terminal, comprising:
a card detainment handling server, a first self-service terminal and a second self-service terminal which are interconnected communicatively, wherein
the card detainment handling server comprises a card detainment information storage module configured to store relevant information of a detained card;
the first self-service terminal comprises a detained card storage module, a detained card destroying module and a detained card control module, the detained card storage module is configured to store the detained physical card, the detained card destroying module is configured to destroy information of the detained card when necessary, and the detained card control module is configured to perform control to store a card which is not taken out before time-out into the detained card storage module, send the relevant information of the detained card to the card detainment handling server, and convey the detained card in the detained card storage module to the detained card destroying module when appropriate; and
the second self-service terminal comprises a card detainment information and identity information input module, a card detainment information and identity authentication module, a card issuing module and a central control module, the card detainment information and identity information input module is configured to input card detainment information and user identity information, the card detainment information and identity authentication module is configured to authenticate whether the card detainment information is valid and whether the user identity information is correct, the card issuing module is configured to write information of the detained card into a new card after confirming that the detained card is destroyed, and issue the new card to a user after authenticating identity of the user, and the central control module is configured to control each module in the second self-service terminal to execute a task.

2. The system for handling card detainment in a self-service terminal according to claim 1, wherein the card detainment handling server is communicatively connected to a bank backend database, and configured to obtain account information and user identity information of the detained card from the bank backend database, to assist the card detainment information and identity authentication module to authenticate the validity of the card detainment information and the correctness of the user identity, and to assist the card issuing module to write the account information and the user identity information of the detained card into the new card.

3. The system for handling card detainment in a self-service terminal according to claim 1, wherein the first self-service terminal further comprises a clearing module configured to clear information in the detained card and clear all dirt on the surface of the card to make the card to be a recyclable blank card.

4. The system for handling card detainment in a self-service terminal according to claim 1, wherein the card detainment handling server is configured to store card detainment information of all the first self-service terminals under administration of the card detainment handling server, and the card detainment information comprises time of detaining a card, a serial number of a self-service terminal detaining the card, a card number of the detained card, magnetic track information of the card and identity information of a possessor of the detained card.

5. The system for handling card detainment in a self-service terminal according to claim 1, wherein the first self-service terminal further comprises a short message sending module configured to send a short message to inform the user that the card is detained and that the card can be taken back on a self-service terminal at a different place.

6. The system for handling card detainment in a self-service terminal according to claim 1, wherein
the first self-service terminal further comprises a card detainment information and identity information input module, a card detainment and identity authentication module, and a card issuing module, wherein the card detainment information and identity information input module is configured to input card detainment information and user identity information, the card detainment and identity authentication module is configured to authenticate whether the card detainment information is valid and whether the user identity information is correct, and the card issuing module is configured to write information of the detained card into a new card after confirming that the detained card is destroyed, and issue the new card to a user after authenticating identity of the user; and/or
the second self-service terminal further comprises a detained card storage module, a detained card destroying module and a detained card control module integrated into the central control module, wherein the detained card storage module is configured to store the detained physical card, the detained card destroying module is configured to destroy information of the detained card when necessary, and the detained card control module is configured to perform control to store a card which is not taken out before time-out into the detained card storage module, send the relevant information of the detained card to the card detainment handling server, and convey the detained card in the detained card storage module to the detained card destroying module when appropriate.

7. The system for handling card detainment in a self-service terminal according to claim 1, wherein the first self-service terminal further comprises an option operation module configured to provide an option of taking back the card at a different place for a user to select whether to take back the card at a different place, and in a case that the user selects the option of taking back the card at a different place, the detained card control module controls the detained card destroying module to destroy the detained card.

8. A method for handling card detainment in a self-service terminal, comprising:
step 1, reading, by a first self-service terminal detaining a card, card detainment information, and uploading, by the first self-service terminal, the card detainment information to a card detainment handling server, when a card is detained while a user performs a self-service business on the first self-service terminal;
step 2, selecting, by the user, a transaction of taking back the detained card on a second self-service terminal, and inputting, by the user, a tail number of the detained card and identity information;
step 3, sending, by the second self-service terminal, user input information to the card detainment handling server, determining, by the card detainment handling server, whether there is the card detainment information related to a card with the tail number, wherein if there is the card detainment information related to a card with the tail number, the method proceeds to step 4, and if there is not the card detainment information related to a card with the tail number, the method proceeds to step 8;
step 4, authenticating, by the card detainment handling server with a bank business system, whether the user identity information and inputted card information is correct, wherein if the user identity information and the inputted card information is correct, the method proceeds to step 5, and if any of the user identity information and the inputted card information is not correct, the method proceeds to step 8;
step 5, sending, by the second self-service terminal, a command of destroying the detained card to the first self-service terminal via the card detainment handling server, erasing, by the first self-service terminal, magnetic track information of the detained card to abandon the detained card, and sending, by the first self-service terminal, information that the detained card is successfully destroyed to the card detainment handling server, after the detained card is successfully abandoned;
step 6, sending, by the card detainment handling server to the second self-service terminal, card information of the user and a command of issuing a card, after confirming that the detained card is successfully destroyed;
step 7, writing, by the second self-service terminal, card information of the user into a new card, issuing, by the second self-service terminal, the new card to the user after the card information is written successfully, sending, by the second self-service terminal to the card detainment handling server, information of successfully issuing the card, and deleting, by the card detainment handling server, card detainment information related to the detained card from a card detainment information storage module; and
step 8, ending the process.

9. The method for handling card detainment in a self-service terminal according to claim 8, wherein after the card of the user is detained, step 1 comprises:
providing, by the first self-service terminal, an option for the user to select whether to take back the card at a different place;
reading, by the first self-service terminal, the card detainment information, uploading, by the first self-service terminal, the card detainment information to the card detainment handling server, and erasing, by the first self-service terminal, magnetic track information of the detained card to destroy the detained card, in a case that the user selects to take back the card at a different place; and
uploading, by the first self-service device, the card detainment information to the card detainment handling server, without temporarily erasing the magnetic track information of the detained card to destroy the detained card, in a case that the user does not select to take back the card at a different place.

10. The method for handling card detainment in a self-service terminal according to claim 8, wherein in step 6, the card information is sent to the second self-service terminal after encrypting the card information and verifying the integrity of the card information, and only authorized terminals can decrypt the card information and obtain the correct card information.
